# EUROPEAN PATENT SPECIFICATION

(11) **EP 2 932 618 B1**
(45) Date of publication and mention of the grant of the patent: **13.12.2017**
(21) Application number: 13863495.1
(22) Date of filing: 28.06.2013
(51) Int. Cl.: H04W 48/10, H04W 88/06, G06K 7/10, G06K 17/00

(54) **SYSTEMS AND METHODS FOR USING A RFID TAG TO INITIATE VOICE COMMUNICATIONS BETWEEN AN AUTOMOBILE AND A BUILDING OF A BUSINESS**
SYSTEME UND VERFAHREN ZUR VERWENDUNG EINES RFID-ETIKETTS ZUR INITIIERUNG EINER SPRACHKOMMUNIKATION ZWISCHEN EINEM KRAFTFAHRZEUG UND GEBÄUDE EINES GESCHÄFTS
SYSTÈMES ET PROCÉDÉS PERMETTANT D'UTILISER UN MARQUEUR RFID POUR INITIER DES COMMUNICATIONS VOCALES ENTRE UNE AUTOMOBILE ET UN BÂTIMENT D'UNE ENTREPRISE

(30) Priority: 12.12.2012 US 201213711700
(43) Date of publication of application: 21.10.2015
(73) Proprietor: Intel Corporation, Santa Clara, CA 95054 (US)
(72) Inventor: RATCLIFF, Joshua J., San Jose, California 95134 (US)
(74) Representative: HGF Limited
(86) International application number: PCT/US2013/048399
(87) International publication number: WO 2014/092800

(56) References cited:
- EP-A1- 2 106 107
- WO-A1-2006/088422
- JP-A- 2006 067 086
- KR-A- 20050 098 036
- KR-A- 20060 057 150
- KR-A- 20090 012 388
- US-A1- 2002 158 752
- US-A1- 2005 254 460
- US-A1- 2008 079 542
- US-A1- 2011 128 381

## Description

### Technical Field

This disclosure generally relates to systems and methods for communicating between Radio Frequency Identification (RFID) tags to initiate voice and/or data communications between frequency-modulated radios installed in an automobile and a building.

### Background

Businesses may accommodate their customers' need for timely and efficient service by providing access to the business without a customer having to leave their automobile. Customer service may be impacted by communications equipment that is located outside and that, may be exposed to the elements (e.g., wind, rain, snow, heat, cold). Similarly, customers may have to roll down their windows and expose themselves to the elements to interface with the communications equipment. Exposure to the elements may be impact the ability of the business to clearly communicate with their customers. In certain instances, poor communication may negatively affect the business. Accordingly, business may want to minimize the impact of poor communications.

WO 2006/088422 A1 relates to an antenna device for a portable radio communication device which comprises an antenna element arranged to operate in two frequency bands of RFID and FM radio.

### Summary of the Invention

The invention is defined in the independent claims. Further embodiments of the invention are defined in the dependent claims.

### Brief Description of the Figures

The features within the drawings are numbered and are cross-referenced with the written description. Generally, the first numeral reflects the drawing number where the feature was first introduced, and the remaining numerals are intended to distinguish the feature from the other notated features within that drawing. However, if a feature is used across several drawings, the number used to identify the feature in the drawing where the feature first appeared will be used. Reference will now be made to the accompanying drawings, which are not necessarily drawn to scale and wherein:
FIG. 1 illustrates a flow diagram for a method for establishing communications between a business and a customer in an automobile in accordance with one or more embodiments of the disclosure.
FIG. 2 illustrates another flow diagram, for a method for establishing communications between a business and a customer in an automobile in accordance with one or more embodiments of the disclosure.
FIG. 3 illustrates a system for communicating between a business and a customer in an automobile in accordance with one or more embodiments of the disclosure.
FIG. 4 illustrates a flow diagram for a method for establishing communications with a business from the point of view of the customer in an automobile in accordance with one or more embodiments of the disclosure.
FIG. 5 illustrates a flow diagram for a method for establishing communications with a customer in an automobile from the point of view of the business in accordance with one or more embodiments of the disclosure.

### Detailed Description

Embodiments of the disclosure are described more fully hereinafter with reference to the accompanying drawings, in which embodiments of the disclosure are shown. This disclosure may, however, be embodied in many different forms and should not be construed as limited to the embodiments set forth herein; rather, these embodiments are provided so that this disclosure will be thorough and complete, and will fully convey the scope of the disclosure to those skilled in the art.

Embodiments described in this disclosure may provide systems, methods, and devices for establishing a voice and/or data communications between a business operating in a building and a customer in their automobile. Generally, a customer will drive up to within 10-50 feet of the building to initiate a transaction with the business.

In one embodiment, the building and the automobile may each include a radio frequency identification (RFID) tag and a frequency-modulated (FM) radio that transmits and receives electromagnetic signals.

The RFID tags may be active RFID tags that may transmit and receive information from each other when they come within proximity of each other. The building RFID tag and the automobile RFID tag may come within range of each other when the automobile drives up and approaches the building.

The building RFID tag may broadcast a communication request periodically to solicit responses from other RFID tags (e.g., the automobile RFID tag). Upon receiving a response, the building RFID tag may send communication information (e.g., voice communication frequency) related to using the FM radio for voice communications. The communication information may also include an encryption key for voice communications, data communication capability of the FM radio, business hours, and/or voice communication credential information. The automobile RFID tag may respond to confirm the automobile has a FM radio capable of transmitting and receiving voice communications. The automobile RFID response may also include data communications capability of the FM radio, an alternate voice communication frequency, and/or customer identification information.

When the FM device capability and voice communication frequency are confirmed, the building FM radio may initiate communication with the automobile FM radio at the frequency encoded within the RFID tag. After opening a voice communication channel, the business and customer may initiate a business transaction using voice communications. For example, the transaction may include, but is not limited to, a banking transaction, a pharmacy order, or a food order. In another embodiment, the frequency may be dynamically changed between other frequencies to improve signal quality or to account for interference issues. The alternative frequencies may also be encoded in the RFID tag. The RFID tag may also encode protocols for making dynamic changes between different frequencies. For example, the protocol may state that a different frequency may be used when communications are not established within a period of time. Another protocol may change frequencies when the quality of the signal and/or strength of the signal fall below a certain threshold.

In one embodiment, the automobile's FM radio may be integrated into the automobile's computer and speakers. The automobile RFID tag may provide the communication information to the computer or the FM radio directly to initiate FM radio voice communication. In the computer embodiment, the computer may direct the voice communication to the speakers installed in the automobile. In another embodiment, the computer may receive the voice communication over the FM radio and direct the voice communication to a Bluetooth headset worn by the driver/occupant of the automobile. In yet another embodiment, the computer may direct the voice communication to a cellular phone of the driver/occupant of the automobile.

Example embodiments of the disclosure will now be described with reference to the accompanying figures.

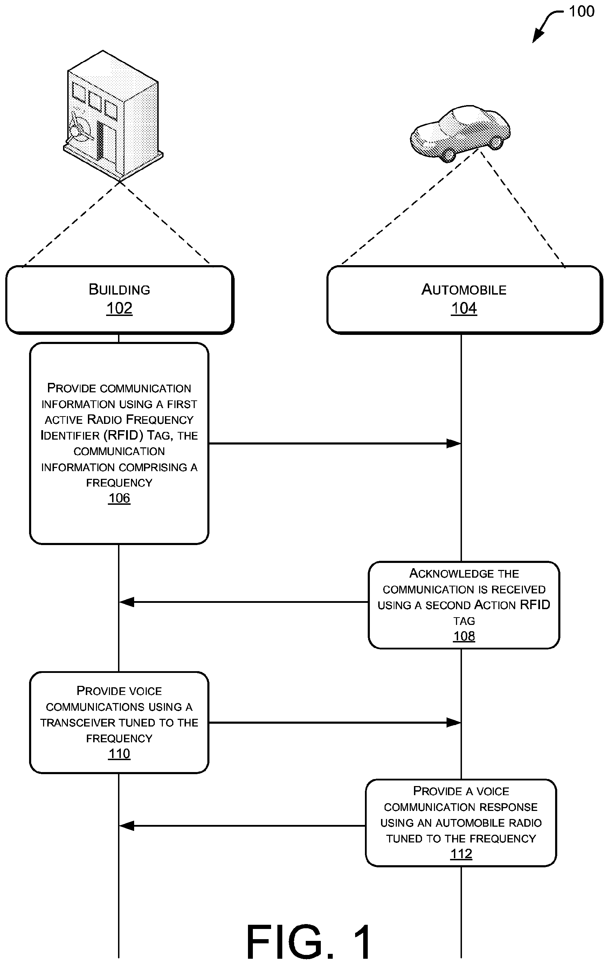

FIG. 1 illustrates a flow diagram for a method 100 of establishing communications between a building 102 and a customer in an automobile 104. As noted above, the building and automobile 104 may use a two-tier communications system. The first-tier may include, but is not limited to, the solicitation and exchange of communication information using radio frequency identification (RFID) tags (not shown) when the building 102 and the automobile 104 are within the proximity of each other. The second-tier may include, but is not limited to, using FM radios (not shown) to establish voice and/or data communications between the building's 102 employees and a customer in the automobile 104.

Although only one building 102 and one automobile 104 are illustrated in FIG. 1, more than one building 102 and more than one automobile 104 may implement the method 100. It should be noted that the sequence operations of the method 100 might be altered or omitted in other embodiments.

In another embodiment, the RFID communications may be initiated between two or more RFID tags within proximity of each other under any circumstance. The RFID tags may be programmed to pair a radio link between any two entities over one or more frequencies. In one another instance, the RFID tags may include a programmable chip or chip set that may be updated over a network or by directly interfacing with the RFID tag.

In another embodiment, the RFID tags may conduct a handshake protocol in which one RFID tag provides a radio frequency and the second RFID tag acknowledges receiving the frequency either by an acknowledgement message or by programming the second RFID tag to send the frequency back to the first RFID tag. In another embodiment, the handshake protocol may be implemented by the radio devices by initiating communications using the frequency or frequencies exchanged between the RFID tags.

In one specific embodiment, two vehicles (e.g., car, truck, construction equipment, etc.) may include an RFID tag that may be used to exchange frequency information while the vehicles are moving or standing still. The vehicles may use the frequency information to establish a radio link that enables the vehicles to exchange voice and/or data communications.

At block 106, the building 102 may use a RFID tag (not shown) to send communication information to the automobile's 104 RFID tag (not shown). The communication information may include a query on whether the automobile 104 is capable of supporting voice communications using a FM radio (not shown). The communication information may also include a frequency to use for voice communications. The building RFID tag may send the communication periodically or intermittently to determine when a capable participant is in proximity of the building 102.

In another embodiment, the building 102 may detect when a customer is approaching or is in range of the building RFID tag. The detection may be based, at least in part, on the automobile's 104 RFID tag coming within the broadcast range of the building 102 RFID tag. In another embodiment, the automobile 104 may be detected by a motion or visual detection sensor installed in or near the building 102. Following the detection of the automobile, the building RFID tag may begin to solicit a response from the automobile 104.

At block 108, the automobile 104 may acknowledge the solicitation by transmitting a response from the automobile's 104 RFID tag. The response may include, but is not limited to, the automobile's 104 FM radio capability to send and receive voice communications. The automobile's 104 RFID tag may also send a message to prepare for voice communications to the automobile's 104 computer and/or FM radio. The frequency range for the FM radio may include 65 Megahertz and 108 Megahertz. In another embodiment, the radio may include an amplitude modulated (AM) radio that may operate in the 150 Kilohertz to 1700 Kilohertz range

In another embodiment, the response may also include an alternate frequency that may be used instead of the frequency provided by the building's 102 RFID tag. In another embodiment, the response may include a frequency range that is supported by the automobile's 104 FM radio.

At block 110, the building's 102 FM radio may open a voice communication channel with the automobile's 104 FM radio. The employee may use the voice communication channel to query the customer about how they may help them or what type of transaction they hope to complete.

In one embodiment, the business may be a bank and the employee may solicit what type of banking transaction the customer may want to complete. The transactions may include, but are not limited to, making a deposit, making a withdrawal, or checking an account balance. The employee may ask the customer fill out the forms that may be provided to customer via a conveyor system that enables the transfer of documents from the building 102 to the automobile 104.

In another embodiment, the business may be a pharmacy and the employee may solicit what type of pharmacy transaction the customer may want to complete. The pharmacy transactions may include, but are not limited to, submitting a prescription, refilling a prescription, and/or picking up a filled prescription. Again, the prescription documents and/or the filled prescriptions may be sent from the building 102 to the automobile 104 via a conveyor system.

In another embodiment, the business may be a restaurant and the employee may solicit an order from the customer. The employee may prepare the order and provide the food to the customer in their automobile 104.

At block 112, the automobile's 104 FM radio may be tuned to the frequency provided by the business and may open the voice communication channel for the customer. When the customer hears the employee's request for information, the customer may respond with an answer by speaking normally within the confines of the automobile 104. The automobile 104 may include a microphone that converts the customer's voice to an electrical signal that is transmitted by the FM radio to the building 102. As noted above, the customer and employee may exchange information over the voice communication channel to complete a transaction as needed. The voice communication channel may be closed at the discretion of the customer or the employee or when the automobile 104 drives away from the building 102 and is outside the range of the building's RFID tag or FM radio.

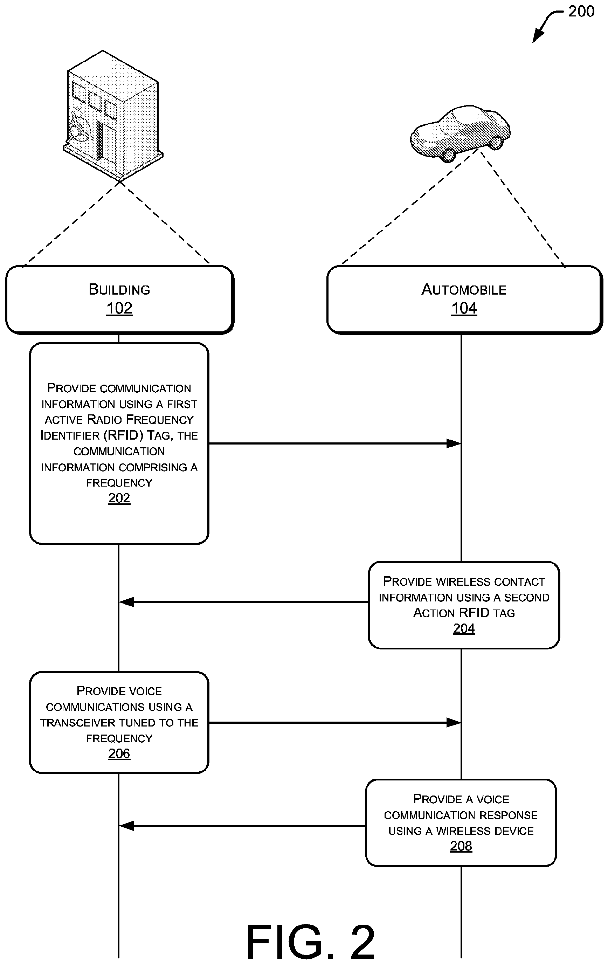

FIG. 2 illustrates another flow diagram for a method 200 for establishing communications between a building 102 and a customer in an automobile 104. In this embodiment, a voice communication channel may be opened between the FM radio of the building 102, the FM radio of the automobile 104, and/or a wireless device in the automobile 104. The automobile 104 may include a wireless network that may connect the computer and/or FM radio with the wireless device worn by or in possession of a driver/occupant of the automobile 104. It should be noted that the sequence operations of the method 200 might be altered or omitted in other embodiments.

At block 202, the building 102 may use a RFID tag to send communication information to the automobile's 104 RFID tag. The communication information may include a query on whether the automobile 104 is capable of supporting voice communications using a FM radio. The communication information may also include a frequency to use for voice communications. The building RFID tag may send the communication periodically or intermittently to determine when a capable participant is in proximity of the building 102.

The building's 102 RFID tag may include a voice communication frequency for FM radios or wireless network information for wireless devices that may be used to exchange voice and/or data communications.

At block 204, the automobile 104 may acknowledge the solicitation by transmitting a response from the automobile's 104 RFID tag. The response may include, but is not limited to, the automobile's 104 FM radio capability to send and receive voice communications. The automobile's 104 RFID tag may also send a message to prepare for voice communications to the automobile's 104 computer and/or FM radio. The response may also include a wireless network capability that may include Wi-Fi (e.g., IEEE 802 devices) devices that may be used to open a communication channel to the automobile's FM radio or a wireless network hosted by the building 102.

At block 206, the building's 102 FM radio may open a voice communication channel with the automobile's 104 FM radio. The employee may use the voice communication channel to query the customer about how they may help them or what type of transaction they hope to complete. In another embodiment, the building 102 may also host a wireless network (not shown) that may open a voice communication channel with a wireless device (e.g., Bluetooth™ headset, cellular phone, tablet,... etc.) in the automobile 104.

At block 208, the automobile's 104 FM radio may be tuned to the frequency provided by the building 102 and may open the voice communication channel for the customer. However, the voice communication channel may be routed from the automobile's FM radio to a wireless device inside the automobile 104. The wireless device may include a speaker to broadcast the voice communication and a microphone to capture the voice of the automobile's 104 driver/occupant. The wireless device may include, but is not limited to, a Bluetooth™ headset, a cellular phone, a tablet, or any other device with a speaker and/or microphone. In this embodiment, the customer may hear the employee's request for information over the FM radio or the wireless device and the customer may respond with an answer by speaking normally within the confines of the automobile 104.

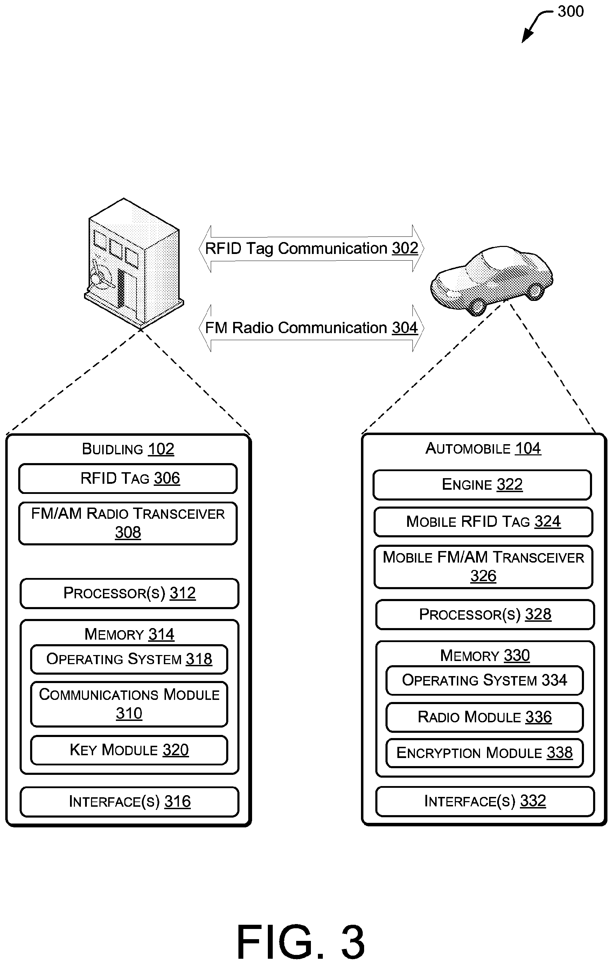

FIG. 3 illustrates a system 300 for communicating between a building 102 and a customer in an automobile 104 using a RFID tag communication channel 302 and a FM radio communication channel 304. The building 102 may include a business that provides services to customers while the customers are in their automobile 104. The businesses may include, but are not limited to, a bank, pharmacy, or a restaurant. The automobile 104 may include, but is not limited to, cars, vans, trucks, motorcycles, mopeds, or any other motorized vehicle that uses a combustion engine, an electrical engine, or a combination of both.

The building 102 may include a RFID Tag 306 to enable the RFID tag communication channel 302. The RFID tag 306 may be an active RFID tag that may include a power source (e.g., a battery) and may be configurable to broadcast different types of information. The RFID tag 306 may include an antenna to send and receive RF communications to and from other RFID tags. The RFID tag 306 may periodically transmit requests to communicate with other RFID tags or may be listening for broadcasts from other RFID tags that enter into range of the RFID tag 306. In one specific embodiment, the RFID tag 306 may be notified of nearby devices when the building 102 includes motion or vision detection sensors that may detect the presence of the automobile 104.

In one embodiment, the RFID tag 306 may receive a response from another RFID tag in the automobile 104. The RFID tag 306 may receive FM radio capability information from the automobile's 104 RFID tag indicating the automobile 104 includes at least a FM radio. The automobile's 104 FM radio may be enabled to send and receive voice communications on a frequency or range of frequencies. The RFID tag 306 may provide that information to the FM/AM radio transceiver 308 or the communications module 310 that may manage the FM/AM radio transceiver 308.

The FM/AM radio transceiver 308 may enable the FM radio communication channel 304 from the point of view of the building 102. Although the FM channel may be used throughout the disclosure to enable the voice communication channel, in other embodiments, the AM (amplitude modulation) channel may also be used to enable voice communication between the building 102 and the automobile 104. The FM/AM radio transceiver 308 may be coupled to a microphone and speaker (not shown). The microphone captures the voice of an employee attempting to speak to the customer in the automobile 104 and the speaker broadcasts the customer's voice so the employee may hear the customer. In another embodiment, FM/AM radio transceiver 308 may be coupled to the communications module 310 that controls the microphone and speaker used by the employee.

The communications module 310 may be a component of a computer that includes a computer processor 312, memory 314, and/or interfaces 316.

The computer processor 312 to execute computer-readable instructions stored in memory 314 that enable the device to execute instructions on the hardware, applications, or services associated with the business. The one or more computer processors 312 may include, without limitation, a central processing unit (CPU), a digital signal processor (DSP), a reduced instruction set computer (RISC), a complex instruction set computer (CISC), a microprocessor, a microcontroller, a field programmable gate array (FPGA), or any combination thereof. In certain embodiments, the computer processor may be based on an Intel® Architecture system and the processor(s) 312 and chipset may be from a family of Intel® processors and chipsets, such as the Intel® Atom® processor family. The one or more processors 312 may also include one or more application-specific integrated circuits (ASICs) or application-specific standard products (ASSPs) for handling specific data processing functions or tasks.

Memory 314 may include an operating system 318 to manage and execute applications stored therein as well as other systems and modules within the computer. The memory 314 may be comprised of one or more volatile and/or non-volatile memory 314 devices including, but not limited to, random access memory (RAM), dynamic RAM (DRAM), static RAM (SRAM), synchronous dynamic RAM (SDRAM), double data rate (DDR) SDRAM (DDR-SDRAM), RAM-BUS DRAM (RDRAM), flash memory devices, electrically erasable programmable read-only memory (EEPROM), non-volatile RAM (NVRAM), universal serial bus (USB) removable memory, or combinations thereof. The memory 314 may include the communications module 310 and the key module 320

The communication module 310 may manage and direct the RFID and FM radio communication channels 302, 304 between the building 102 and the automobile 104. The communication module 310 may direct RFID tag 306 to periodically broadcast a solicitation message to automobiles that may be in proximity to the building 102. The communication module 310 may also control motion or visual sensors that may detect an automobile 104 that may need assistance from an employee. Upon detection, the communications module 310 may direct the RFID tag 306 to read the automobile 104 for a RFID tag 306. The RFID tag 306 may provide automobile's 104 RFID tag 306 information to the communications module 310.

In one embodiment, when the tag information indicates the automobile 104 includes a FM radio enabled to send and receive voice communication, the communications module 310 may direct the FM/AM radio transceiver 308 to open a communications channel with the automobile 104. The communications module 310 may alert the employee that a customer is waiting to be assisted. The communications module 310 may enable a microphone and speaker for the employee to use for communicating with the customer. The employee and customer may engage in a business transaction by exchanging information over the voice communication channel. In another embodiment, the voice communications channel may enable a data transfer that may be displayed on the display screen of the automobile's 104 FM radio. The data may include order information, account information, or any other type of information the customer may want to confirm or verify before completing a transaction.

In another embodiment, when the tag information indicates the automobile 104 includes a wireless device in the automobile 104, the communications module 310 may direct the wireless system (to be described below) to open a communications channel with the wireless device in the automobile 104. In this instance, the FM/AM radio transceiver 308 may not be used to open the voice communication channel (e.g., FM radio communication 304). However, the wireless communication channel may enable the employee to communicate with the customer to complete any type of transaction for the business.

The key module 320 may provide encryption protocols that enable the communications module 310 to encrypt the voice and/or data communication between the building 102 and the automobile 104. The encryption keys may be used to encrypt certain types of information that may be closely held by the business and not readily available or accessible to others not engaged in the business transaction. The encryption keys may be configured to encrypt voice and/ or data communications over the FM/AM radio transceiver 308 or the wireless system.

The computer may also include an Input/Output (I/O) interface 316 that enables a user to view content displayed by the device or to interact with the computer using various tactile responsive interfaces such as a keyboard, touch screen, or mouse. The I/O interface 316 may also include a wireless system that may enable the communication key module 320 to communicate wirelessly with the wireless devices in the automobile 104. The wireless system may include the hardware and software to broadcast and receive messages either using the Wi-Fi Direct Standard (*See;* Wi-Fi Direct specification published in Oct. 2010) and or the IEEE 802.11 wireless standard (*See*; IEEE 802.11-2007, published March 8, 2007; IEEE 802.11n-2009, published Oct. 2009) or a combination thereof. The wireless system may include a transmitter and a receiver or a transceiver (not shown) capable of operating in a broad range of operating frequencies governed by the 802.11 wireless standard.

The automobile 104 may include an engine 322, a mobile RFID tag 324, a mobile FM/AM transceiver 326, and a computer that includes a computer processor 328, memory 330, and interface 332.

The engine 322 may include, but is not limited to, a combustion engine that may run on gasoline, diesel, or any other petroleum-based product. The engine may provide power to drive a transmission that moves the car backwards or forwards. The engine may also include an electrical system that stores or generates power that may be provided to the computer, the mobile RFID tag 324, and/or the mobile FM/AM transceiver 326. In another embodiment, the engine 322 may include an electrical engine that receives power from batteries or solar panels incorporated into the automobile 104. In another embodiment, the engine 322 may be a combination of a combustion engine and an electrical engine.

The computer processor 328 may execute computer-readable instructions stored in memory 330 that enable the device to execute instructions on the hardware, applications, or services. The one or more computer processors 238 may include, without limitation, a central processing unit (CPU), a digital signal processor (DSP), a reduced instruction set computer (RISC), a complex instruction set computer (CISC), a microprocessor, a microcontroller, a field programmable gate array (FPGA), or any combination thereof. In certain embodiments, the processor 328 may be based on an Intel® Architecture system and the processor(s) 238 and chipset may be from a family of Intel® processors and chipsets, such as the Intel® Atom® processor family. The one or more processors 328 may also include one or more application-specific integrated circuits (ASICs) or application-specific standard products (ASSPs) for handling specific data processing functions or tasks.

Similar to those described above, the one or more interfaces 332 allow for the coupling of devices such as displays, keyboards, storage devices, and so forth. Likewise, the one or more interfaces 332 may be configured to couple to other devices over a wireless network.

The one or more memories 330 may store instructions for execution by the one or more processors 328 which perform certain actions or functions. These instructions may include an operating system 334 configured to manage hardware resources, such as the interfaces 332, and provide various services to applications executing on the one or more processors 328.

The memory 330 may also include a radio module 336 to manage FM radio communication 304 and an encryption module 338 to encrypt the communication between the building 102 and the automobile 104.

The radio module 336 may interface with the mobile RFID tag 324 to receive FM frequencies or any other information that may be provided from the building 102 using the RFID tag 306. The radio module 336 may use the information to open a voice/data communication channel using the mobile FM/AM transceiver 326 in the automobile 104. The voice communication from the building 102 may be provided to a speaker and a microphone may capture the verbal responses from the customer in the automobile 104. In certain instances, the radio module 336 may receive data from the building 102 and that data may be displayed on the display screen of the mobile FM/AM transceiver 326 or another display screen within the automobile 104. In another embodiment, the data may be displayed directly on the mobile FM/AM transceiver 326 without being routed through the radio module 336.

In another embodiment, the radio module 336 may direct the incoming voice communication to a wireless device in the automobile 104 instead of the speaker. The wireless device may include, but is not limited to, a wireless headset, a cellular phone, a tablet, or a laptop. The wireless device may include a speaker to broadcast the voice communications from the building and a microphone to capture the customer's verbal utterances that are sent to the building 102 via the mobile FM/AM transceiver 326.

The encryption module 338 may receive encryption keys from the building 102 or store encryption keys that may be used to encrypt the voice/data communication sent or received over the mobile FM/AM transceiver 326. The encryption module 338 may use the processor 328 to encrypt or decrypt the voice/data communication.

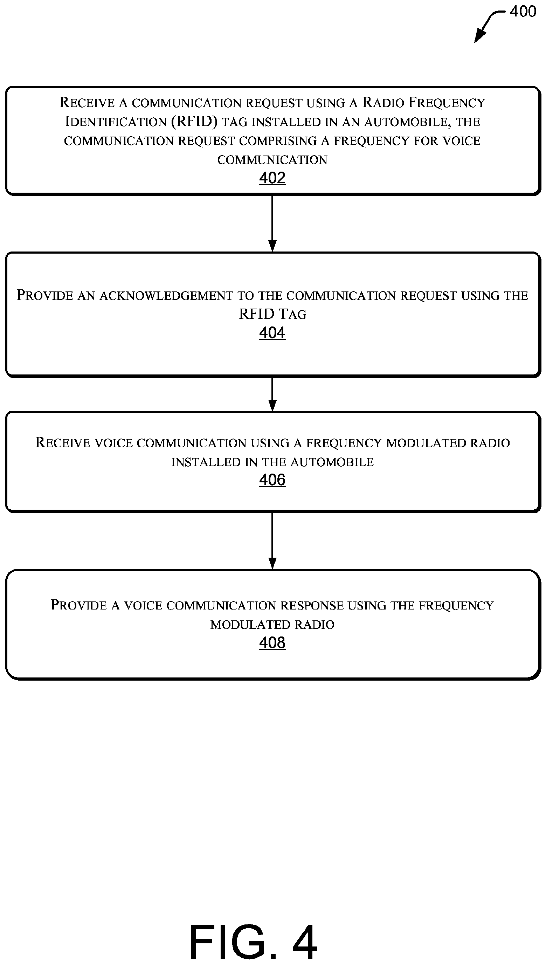

FIG. 4 illustrates a flow diagram for a method 400 for establishing communications with a business in a building 102 from the point of view of the customer in an automobile 104. In this embodiment, a voice communication channel may be opened between the FM/AM radio transceiver 308 of the building 102, the mobile FM/AM transceiver 326 of the automobile 104. The method may incorporate two different communication links to enable the voice communication. The first link may be the RFID tag communication link 302 between the building 102 and the automobile 104. The second link may be the FM radio communication link 304 between the building 102 and the automobile 104. It should be noted that the sequence operations of the method 200 might be altered or omitted in other embodiments.

At block 402, the automobile 104 may receive a communication request using a mobile RFID tag 324 installed in an automobile 104. The communication request may include a frequency or range of frequencies that may be used by mobile FM/AM transceiver 326. The communication request may also include, but is not limited to, an encryption key, data compatibility information, and/or wireless capability information.

The encryption key information may be used to secure the voice communications sent over the FM radio communication link 304. The encryption key may be used to encrypt outgoing communications and decrypt incoming communications from the building 102.

The data compatibility information may indicate whether the FM radio communication link 304 can support data that may be displayed within the automobile 104. This may include the data format or the amount of data that may be sent. The data compatibility information may inform the automobile 104 of the type and quantity of data that may be provided over the FM radio communication link 304.

The wireless compatibility information may indicate whether the building 102 may support wireless communication over a network governed by IEEE 802 wireless standard. This network may offer an alternative network to communication with the automobile 104 instead of the FM radio communication link 304.

At block 404, the automobile 104 may provide an acknowledgment to the communication request using the mobile RFID tag 324. The acknowledgement may indicate that the automobile is capable of supporting the FM radio communication link 304. This may include listing the available frequencies supported by the mobile FM/AM transceiver 326. In one specific embodiment, the acknowledgment may provide an alternate frequency to enable the FM radio communication link 304. The building 102 may elect to use the alternate frequency in place of the frequency provided in the previous step described in description of block 402.

At block 406, the automobile 104 may receive the voice communications using the FM radio communication link 304. The voice communication may be routed to the speaker installed in the automobile 104 or to a wireless device (e.g., headset) used by the driver/occupant in the automobile 104. A microphone installed in the automobile 104 or the wireless device may capture the verbal utterances of the driver/occupant and provide them to the FM radio communications link 304 that enables the business to listen to the utterances.

At block 408, the automobile 104 may provide a voice communication response using the transmitter of the mobile FM/AM transceiver 326 to send the verbal utterances of the driver/occupant to the employee in the building 102. The mobile FM/AM transceiver 326 may be the source of the automobile's 104 contribution to the FM radio communication link 304.

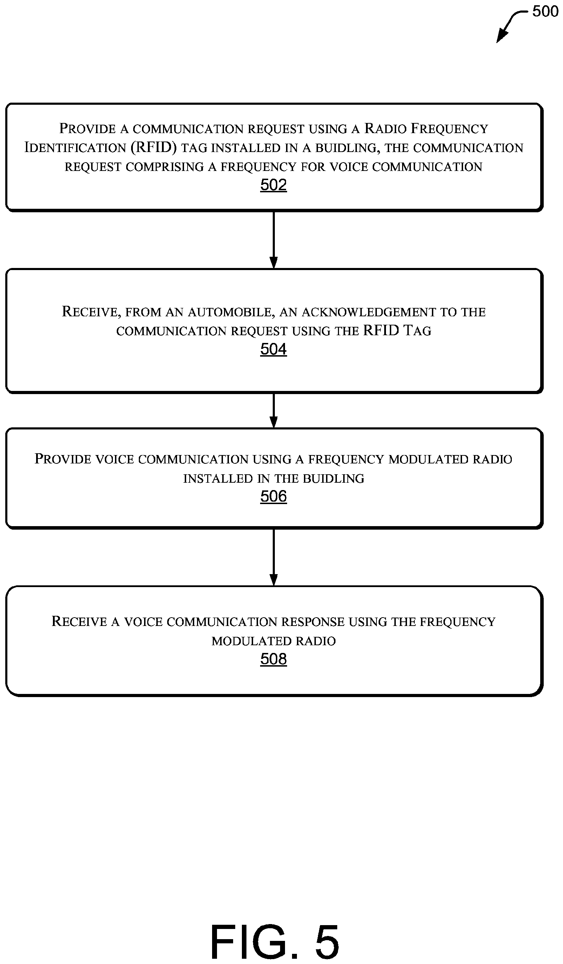

FIG. 5 illustrates a flow diagram for a method 500 for establishing communications with a customer in an automobile 104 from the point of view of the business in a building 102. In this embodiment, a voice communication channel may be opened between the FM/AM radio transceiver 308 of the building 102, the mobile FM/AM transceiver 326 of the automobile 104. The method may incorporate two different communication links to enable the voice communication. The first link may be the RFID tag communication link 302 between the building 102 and the automobile 104. The second link may be the FM radio communication link 304 between the building 102 and the automobile 104. It should be noted that the sequence operations of the method 200 might be altered or omitted in other embodiments.

At block 502, the building 102 may provide a communication request to an automobile 104 using a radio identification (RFID) tag (e.g., RFID tag 306). The communication request may include, but is not limited to, a frequency for a FM/AM transceiver 308 that may be used for voice/data communications. In another embodiment, the communication request may also include an encryption key that may be used to encrypt/decrypt the voice/data communications transmitted and received over the FM/AM radio transceiver 308.

At block 504, the building 102 may receive an acknowledgement to the communication request, using the RFID tag 306. The acknowledgement may indicate that the automobile 104 is capable of establishing the FM radio communication link 304 with the building 102. The acknowledgement may also indicate if the automobile 104 is capable of receiving and displaying data sent over the FM radio communication link 304. The acknowledgement may also indicate if the automobile 104 is capable of sending and receiving voice/data communication over a wireless network governed by the IEEE 802 communications protocol.

At block 506, the building 102 may provide voice communications to the automobile 104 using a frequency-modulated wireless device (e.g., FM/AM radio transceiver 308). The voice communications may be related to completing a transaction between the business in the building 102 and the customer in the automobile 104.

At block 508, the building 102 may receive a voice communication response from the automobile 104 using a frequency-modulated wireless device (e.g., FM/AM radio transceiver 308). As noted above, the driver/occupant of the automobile 104 may be attempting to facilitate or complete a transaction with an employee of the business that resides in the building 102. The business may include, but is not limited to, a bank, pharmacy, or a restaurant.

### Conclusion

Embodiments described herein may be implemented using hardware, software, and/or firmware, for example, to perform the methods and/or operations described herein. Certain embodiments described herein may be provided as a tangible machine-readable medium storing machine-executable instructions that, if executed by a machine, cause the machine to perform the methods and/or operations described herein. The tangible machine-readable medium may include, but is not limited to, any type of disk including floppy disks, optical disks, compact disk read-only memories (CD-ROMs), compact disk rewritables (CD-RWs), magneto-optical disks, semiconductor devices such as read-only memories (ROMs), random access memories (RAMs) such as dynamic and static RAMs, erasable programmable read-only memories (EPROMs), electrically erasable programmable read-only memories (EEPROMs), flash memories, magnetic or optical cards, or any type of tangible media suitable for storing electronic instructions. The machine may include any suitable processing or computing platform, device or system and may be implemented using any suitable combination of hardware and/or software. The instructions may include any suitable type of code and may be implemented using any suitable programming language. In other embodiments, machine-executable instructions for performing the methods and/or operations described herein may be embodied in firmware.

Various features, aspects, and embodiments have been described herein. The features, aspects, and embodiments are susceptible to combination with one another as well as to variation and modification, as will be understood by those having skill in the art. The present disclosure should therefore, be considered to encompass such combinations, variations, and modifications.

The terms and expressions, which have been employed herein, are used as terms of description and not of limitation. In the use of such terms and expressions, there is no intention of excluding any equivalents of the features shown and described (or portions thereof), and it is recognized that various modifications are possible within the scope of the claims. Other modifications, variations, and alternatives are also possible. Accordingly, the claims are intended to cover all such equivalents.

While certain embodiments of the disclosure have been described in connection with what is presently considered to be the most practical and various embodiments, it is to be understood that the disclosure is not to be limited to the disclosed embodiments, but on the contrary, is intended to cover various modifications and equivalent arrangements included within the scope of the claims. Although specific terms are employed herein, they are used in a generic and descriptive sense only, and not for purposes of limitation.

This written description uses examples to disclose certain embodiments of the disclosure, including the best mode, and to enable any person skilled in the art to practice certain embodiments of the disclosure, including making and using any devices or systems and performing any incorporated methods. The patentable scope of certain embodiments of the disclosure is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system comprising:
an active radio frequency identification, RFID, tag (306) to:
send, to another RFID tag (324), a voice communication request, the voice communication request comprising a frequency (106, 502); and
receive, from the other RFID tag (324), a response to the voice communication request, the response comprising an acknowledgement of the frequency or an alternate frequency (504); and
a frequency-modulated radio (308) to send and receive voice communications using the frequency or the alternate frequency (110,506,508).

2. The system of claim 1, wherein the active RFID tag comprises a first active RFID tag (306) and the frequency-modulated radio comprises a first frequency-modulated radio (308), and the system further comprises:
a second active RFID tag (324) to:
receive the voice communication request (402); and
send the response to the voice communication request (108, 404); and
a second frequency-modulated radio (326) to send and receive voice communications using the frequency or the alternate frequency (112, 406 and 408).

3. A radio frequency identification, RFID, tag (324) comprising:
means for receiving from an active RFID tag (306) a voice communication request, the voice communication request comprising a frequency (402);
means for encoding one or more frequencies for radio communication devices, the one or more frequencies being used for voice communications between the radio communication devices; and
means for sending a response to the voice communication request to the active RFID tag (306), the response comprising an acknowledgement of the frequency or an alternate frequency among the encoded one or more frequencies (404).

4. The RFID tag (324) of claim 3, further comprising means for identifying an acknowledgement protocol, the acknowledgement protocol comprising a confirmation message indicating the one or more frequencies were received and the one or more radios are configured to send or receive voice communications.

5. A radio frequency identification, RFID, tag (306) comprising:
means for sending a communication request to another RFID tag (324), the communication request comprising a frequency for voice communications (502); and
means for receiving a response to the voice communication request from the other RFID tag (324), the response comprising an acknowledgement of the frequency or an alternate frequency ( 504).

6. The RFID tag of claim 5 (306), further comprising:
means for providing the communication request to a frequency-modulated radio (326);
means for tuning the frequency-modulated radio (326) to the frequency for voice communications;
means for receiving the voice communications provided over the frequency; and
means for providing a voice communication response.

7. The RFID tag (306) of claims 5 or 6, wherein the frequency comprises a first frequency, and further comprising:
means for receiving the voice communications provided over the first frequency;
means for determining that the voice communications provided over the first frequency has exceeded a quality threshold;
means for sending an alternate communication request to the other RFID tag (324), the alternate communication request comprising a second frequency for voice communications; and
means for receiving an acknowledgment to the alternate communication request, the acknowledgement indicating the second frequency was received by the other RFID tag (324).

8. The RFID tag (306) of claims 5 or 6, wherein the frequency comprises a first frequency, and the voice communication request further comprises a second frequency, the method further comprising:
means for determining that the voice communications provided over the first frequency has not met a quality threshold; and
means for sending a frequency change request to the other RFID tag (324), the frequency change request comprising an instruction to change to the second frequency.

9. An system comprising one or more tangible computer-readable storage media comprising computer-executable instructions operable to, when executed by at least one computer processor, enable the at least one computer processor to perform the operations comprising:
sending a communication request, using a radio frequency identification, RFID, tag (306), to another RFID tag (324), the communication request comprising a first frequency to be used for voice communications (502); and
receiving, using a RFID tag (306), a response to the communication request from the RFID tag, the response comprising an acknowledgment of the first frequency or an alternate frequency (504);
receiving, using a frequency-modulated radio (308), the voice communications provided over the first frequency or an alternate frequency, (508) the frequency-modulated radio comprising a transmitter and a receiver.

10. The apparatus of claim 9, wherein the frequency comprises a first frequency, and the communication request further comprises a second frequency, the at least one processor further configured to execute the computer-executable instructions comprising:
determining the voice communications provided over the first frequency has not met a quality threshold; and
sending a frequency change request, using the RFID tag (306), to the other RFID tag (324), the frequency change request comprising an instruction to change to the second frequency;
receiving, using the RFID tag (306), an acknowledgment to the frequency change request; and
receiving, using the frequency-modulated radio (308), the voice communications provided over the second frequency.

11. A method performed by a radio frequency identification, RFID, tag (324) comprising:
receiving a communication request from an active RFID tag (306) (402), the communication request comprising a frequency for voice communications, the RFID tag (324) comprising memory to encode the frequency and an antenna;
encoding one or more frequencies for radio communication devices, the one or more frequencies being used for voice communications between the radio communication devices ; and sending a response to the voice communication request to the active RFID tag (306), the response comprising an acknowledgment of the frequency or an alternate frequency among the encoded one or more frequencies (404).

12. The method of claim 11, further comprising:
receiving a frequency change request, using the RFID tag (324), the frequency change request comprising an instruction to change to the second frequency;
sending, using the frequency-modulated radio (326), an acknowledgment to the frequency change request; and
receiving, using the RFID tag (324), the voice communications provided over the second frequency.

13. An apparatus comprising one or more tangible computer-readable storage media comprising computer-executable instructions operable to, when executed by at least one computer processor, enable the at least one computer processor to perform the operations comprising:
receiving a communication request from an active RFID tag (306), the communication request comprising a frequency for voice communications (402);
encoding one or more frequencies for radio communication devices, on an RFID tag, the one or more frequencies being used for voice communications between the radio communication devices; and
sending a response to the voice communication request to the active RFID tag (306), the response comprising an acknowledgement of the frequency or an alternate frequency among the encoded one or more frequencies.

14. The apparatus of claim 13, the at least one processor further configured to execute the computer-executable instructions to program the memory to store or edit the one or more frequencies.

15. The apparatus of claims 13 or 14, wherein the radio communication devices comprise a frequency modulated radio, an amplitude modulated radio, or a combination thereof.

## Patentansprüche

1. System, umfassend:
ein aktives Radiofrequenzidentifikations(Radio Frequency Identification, RFID)-Etikett (306) zum:
Senden, an ein anderes RFID-Etikett (324), einer Sprachkommunikationsanforderung, wobei die Sprachkommunikationsanforderung eine Frequenz umfasst (106, 502); und
Empfangen, von dem anderen RFID-Etikett (324), einer Antwort auf die Sprachkommunikationsanforderung, wobei die Antwort eine Rückmeldung der Frequenz oder eine alternative Frequenz umfasst (504); und
ein frequenzmoduliertes Funkgerät (308) zum Senden und Empfangen von Sprachkommunikationen unter Verwendung der Frequenz oder der alternativen Frequenz (110, 506, 508).

2. System nach Anspruch 1, wobei das aktive RFID-Etikett ein erstes aktives RFID-Etikett (306) umfasst und das frequenzmodulierte Funkgerät ein erstes frequenzmoduliertes Funkgerät (308) umfasst, und das System ferner Folgendes umfasst:
ein zweites aktives RFID-Etikett (324) zum:
Empfangen der Sprachkommunikationsanforderung (402); und
Senden der Antwort auf die Sprachkommunikationsanforderung (108, 404); und
ein zweites frequenzmoduliertes Funkgerät (326) zum Senden und Empfangen von Sprachkommunikationen unter Verwendung der Frequenz oder der alternativen Frequenz (112, 406 und 408).

3. Radiofrequenzidentifikations(Radio Frequency Identification, RFID)-Etikett (324), umfassend:
Mittel zum Empfangen einer Sprachkommunikationsanforderung von einem aktiven RFID-Etikett (306), wobei die Sprachkommunikationsanforderung eine Frequenz umfasst (402) ;
Mittel zum Kodieren einer oder mehrerer Frequenzen für Funkkommunikationsgeräte, wobei die eine oder die mehreren Frequenzen für Sprachkommunikationen zwischen den Funkkommunikationsgeräten verwendet werden; und
Mittel zum Senden einer Antwort auf die Sprachkommunikationsanforderung an das aktive RFID-Etikett (306), wobei die Antwort eine Rückmeldung der Frequenz oder eine alternative Frequenz unter der kodierten einen oder den kodierten mehreren Frequenzen umfasst (404).

4. RFID-Etikett (324) nach Anspruch 3, ferner umfassend Mittel zum Identifizieren eines Rückmeldungsprotokolls, wobei das Rückmeldungsprotokoll eine Bestätigungsnachricht umfasst, die anzeigt, dass eine oder mehrere Frequenzen empfangen wurden und das eine oder die mehreren Funkgeräte konfiguriert sind, um Sprachkommunikationen zu senden oder zu empfangen.

5. Radiofrequenzidentifikations(Radio Frequency Identification, RFID)-Etikett (306), umfassend:
Mittel zum Senden einer Kommunikationsanforderung an ein anderes RFID-Etikett (324), wobei die Kommunikationsanforderung eine Frequenz für Sprachkommunikationen (502) umfasst; und
Mittel zum Empfangen einer Antwort auf die Sprachkommunikationsanforderung von dem anderen RFID-Etikett (324), wobei die Antwort eine Rückmeldung der Frequenz oder eine alternative Frequenz umfasst (504).

6. RFID-Etikett (306) nach Anspruch 5, ferner umfassend:
Mittel zum Bereitstellen der Kommunikationsanforderung an ein frequenzmoduliertes Funkgerät (326);
Mittel zum Abstimmen des frequenzmodulierten Funkgeräts (326) auf die Frequenz für Sprachkommunikationen;
Mittel zum Empfangen der über die Frequenz bereitgestellten Sprachkommunikationen; und
Mittel zum Bereitstellen einer Sprachkommunikationsantwort.

7. RFID-Etikett (306) nach Anspruch 5 oder 6, wobei die Frequenz eine erste Frequenz umfasst, und ferner umfassend:
Mittel zum Empfangen der über die erste Frequenz bereitgestellten Sprachkommunikationen;
Mittel zum Bestimmen, dass die über die erste Frequenz bereitgestellten Sprachkommunikationen einen Qualitätsschwellenwert überschritten haben;
Mittel zum Senden einer alternativen Kommunikationsanforderung an das andere RFID-Etikett (324), wobei die alternative Kommunikationsanforderung eine zweite Frequenz für Sprachkommunikationen umfasst; und
Mittel zum Empfangen einer Rückmeldung der alternativen Kommunikationsanforderung, wobei die Rückmeldung anzeigt, dass die zweite Frequenz von dem anderen RFID-Etikett (324) empfangen wurde.

8. RFID-Etikett (306) nach Anspruch 5 oder 6, wobei die Frequenz eine erste Frequenz umfasst und die Sprachkommunikationsanforderung ferner eine zweite Frequenz umfasst, wobei das Verfahren ferner Folgendes umfasst:
Mittel zum Bestimmen, dass die über die erste Frequenz bereitgestellten Sprachkommunikationen einen Qualitätsschwellenwert nicht erreicht haben; und
Mittel zum Senden einer Frequenzänderungsanforderung an das andere RFID-Etikett (324), wobei die Frequenzänderungsanforderung eine Anweisung zum Wechseln auf die zweite Frequenz umfasst.

9. System, umfassend ein oder mehrere greifbare computerlesbare Speichermedien, die computerausführbare Anweisungen umfassen, die bei Ausführung durch mindestens einen Computerprozessor betreibbar sind, um dem mindestens einen Computerprozessor zu ermöglichen, die Vorgänge durchzuführen, welche folgende umfassen:
Senden einer Kommunikationsanforderung unter Verwendung eines Radiofrequenzidentifikations(Radio Frequency Identification, RFID)-Etiketts (306) an ein anderes RFID-Etikett (324), wobei die Kommunikationsanforderung eine erste Frequenz umfasst, die für Sprachkommunikationen verwendet werden soll (502); und
Empfangen, unter Verwendung eines RFID-Etiketts (306), einer Antwort auf die Kommunikationsanforderung von dem RFID-Etikett, wobei die Antwort eine Rückmeldung der ersten Frequenz oder eine alternative Frequenz umfasst (504);
Empfangen, unter Verwendung eines frequenzmodulierten Funkgeräts (308), der über die erste Frequenz oder eine alternative Frequenz bereitgestellten Sprachkommunikationen (508), wobei das frequenzmodulierte Funkgerät einen Sender und einen Empfänger umfasst.

10. Vorrichtung nach Anspruch 9, wobei die Frequenz eine erste Frequenz umfasst und die Kommunikationsanforderung ferner eine zweite Frequenz umfasst, wobei der mindestens eine Prozessor ferner konfiguriert ist, um die computerausführbaren Anweisungen auszuführen, die folgende umfassen:
Bestimmen, dass die über die erste Frequenz bereitgestellten Sprachkommunikationen einen Qualitätsschwellenwert nicht erreicht haben; und
Senden einer Frequenzänderungsanforderung, unter Verwendung des RFID-Etiketts (306), an das andere RFID-Etikett (324), wobei die Frequenzänderungsanforderung eine Anweisung zum Wechseln auf die zweite Frequenz umfasst;
Empfangen, unter Verwendung des RFID-Etiketts (306), einer Rückmeldung auf die Frequenzänderungsanforderung; und
Empfangen, unter Verwendung des frequenzmodulierten Funkgeräts (308), der über die zweite Frequenz bereitgestellten Sprachkommunikationen.

11. Verfahren, durchgeführt von einem Radiofrequenzidentifikations(Radio Frequency Identification, RFID)-Etikett (324), umfassend:
Empfangen einer Kommunikationsanforderung von einem aktiven RFID-Etikett (306) (402), wobei die Kommunikationsanforderung eine Frequenz für Sprachkommunikationen umfasst, wobei das RFID-Etikett (324) einen Speicher zum Kodieren der Frequenz und eine Antenne umfasst;
Kodieren einer oder mehrerer Frequenzen für Funkkommunikationsgeräte, wobei die eine oder die mehreren Frequenzen für Sprachkommunikationen zwischen den Funkkommunikationsgeräten verwendet werden; und
Senden einer Antwort auf die Sprachkommunikationsanforderung an das aktive RFID-Etikett (306), wobei die Antwort eine Rückmeldung der Frequenz oder eine alternative Frequenz unter der kodierten einen oder den kodierten mehreren Frequenzen umfasst (404).

12. Verfahren nach Anspruch 11, ferner umfassend:
Empfangen einer Frequenzänderungsanforderung, unter Verwendung des RFID-Etiketts (324), wobei die Frequenzänderungsanforderung eine Anweisung zum Wechseln auf die zweite Frequenz umfasst;
Senden, unter Verwendung des frequenzmodulierten Funkgeräts (326), einer Rückmeldung auf die Frequenzänderungsanforderung; und
Empfangen, unter Verwendung des RFID-Etiketts (324), der über die zweite Frequenz bereitgestellten Sprachkommunikationen.

13. Vorrichtung, umfassend ein oder mehrere greifbare computerlesbare Speichermedien, die computerausführbare Anweisungen umfassen, die bei Ausführung durch mindestens einen Computerprozessor betreibbar sind, um dem mindestens einen Computerprozessor zu ermöglichen, die Operationen durchzuführen, welche folgende umfassen:
Empfangen einer Kommunikationsanforderung von einem aktiven RFID-Etikett (306), wobei die Kommunikationsanforderung eine Frequenz für Sprachkommunikationen umfasst (402);
Kodieren einer oder mehrerer Frequenzen für Funkkommunikationsgeräte, auf einem RFID-Etikett, wobei die eine oder die mehreren Frequenzen für Sprachkommunikationen zwischen den Funkkommunikationsgeräten verwendet werden; und
Senden einer Antwort auf die Sprachkommunikationsanforderung an das aktive RFID-Etikett (306), wobei die Antwort eine Rückmeldung der Frequenz oder eine alternative Frequenz unter der kodierten einen oder kodierten mehreren Frequenzen umfasst.

14. Vorrichtung nach Anspruch 13, wobei der mindestens eine Prozessor ferner konfiguriert ist, um die computerausführbaren Anweisungen auszuführen, um den Speicher zu programmieren, um die eine oder die mehreren Frequenzen zu speichern oder zu bearbeiten.

15. Vorrichtung nach Anspruch 13 oder 14, wobei die Funkkommunikationsgeräte ein frequenzmoduliertes Funkgerät, ein amplitudenmoduliertes Funkgerät oder eine Kombination davon umfassen.

## Revendications

1. Système comprenant :
une étiquette d'identification par radiofréquence (RFID) active (306) :
pour envoyer, à une autre étiquette d'identification RFID (324), une demande de communication vocale, la demande de communication vocale comprenant une fréquence (106, 502) ; et
pour recevoir, de l'autre étiquette d'identification RFID (324), une réponse à la demande de communication vocale, la réponse comprenant un accusé de réception de la fréquence ou d'une fréquence alternative (504) ; et
une radio modulée en fréquence (308) pour envoyer et recevoir des communications vocales à l'aide de la fréquence ou de la fréquence alternative (110, 506, 508).

2. Système selon la revendication 1, dans lequel l'étiquette d'identification RFID active comprend une première étiquette d'identification RFID active (306) et la radio modulée en fréquence comprend une première radio modulée en fréquence (308) et le système comprend en outre :
une seconde étiquette d'identification RFID active (324) :
pour recevoir la demande de communication vocale (402) ; et
pour envoyer la réponse à la demande de communication vocale (108, 404) et
une seconde radio modulée en fréquence (326) pour envoyer et recevoir des communications vocales à l'aide de la fréquence ou de la fréquence alternative (112, 406 et 408).

3. Étiquette d'identification par radiofréquence (RFID) (324) comprenant :
un moyen pour recevoir, d'une étiquette d'identification RFID active (306), une demande de communication vocale, la demande de communication vocale comprenant une fréquence (402) ;
un moyen pour coder une ou plusieurs fréquences pour des dispositifs de radiocommunication, la ou les fréquences étant utilisées pour des communications vocales entre les dispositifs de radiocommunication ; et
un moyen pour envoyer une réponse à la demande de communication vocale à l'étiquette d'identification RFID active (306), la réponse comprenant un accusé de réception de la fréquence ou d'une fréquence alternative parmi la ou les fréquences codées (404).

4. Étiquette d'identification RFID (324) selon la revendication 3, comprenant en outre un moyen pour identifier un protocole d'accusé de réception, le protocole d'accusé de réception comprenant un message de confirmation indiquant que la ou les fréquences ont été reçues et que la ou les radios ont été configurées pour envoyer ou recevoir des communications vocales.

5. Étiquette d'identification par radiofréquence (RFID) (306) comprenant :
un moyen pour envoyer une demande de communication à une autre étiquette d'identification RFID (324), la demande de communication comprenant une fréquence pour des communications vocales (502) ;
un moyen pour recevoir une réponse à la demande de communication vocale en provenance de l'autre étiquette d'identification RFID (324), la réponse comprenant un accusé de réception de la fréquence ou d'une fréquence alternative (504).

6. Étiquette d'identification RFID (306) selon la revendication 5 (306), comprenant en outre :
un moyen pour fournir la demande de communication à une radio modulée en fréquence (326) ;
un moyen pour régler la radio modulée en fréquence (326) à la fréquence pour des communications vocales ;
un moyen pour recevoir les communications vocales fournies sur la fréquence ; et
un moyen pour fournir une réponse de communication vocale.

7. Étiquette d'identification RFID (306) selon la revendication 5 ou 6, dans laquelle la fréquence comprend une première fréquence et comprenant en outre :
un moyen pour recevoir les communications vocales fournies sur la première fréquence ;
un moyen pour déterminer que les communications vocales fournies sur la première fréquence ont dépassé un seuil de qualité ;
un moyen pour envoyer une demande de communication alternative à l'autre étiquette d'identification RFID (324), la demande de communication alternative comprenant une seconde fréquence pour des communications vocales ; et
un moyen pour recevoir un accusé de réception à la demande de communication alternative, l'accusé de réception indiquant que la seconde fréquence a été reçue par l'autre étiquette d'identification RFID (324).

8. Étiquette d'identification RFID (306) selon la revendication 5 ou 6, dans laquelle la fréquence comprend une première fréquence et la demande de communication vocale comprend en outre une seconde fréquence, le procédé comprenant en outre :
un moyen pour déterminer que les communications vocales fournies sur la première fréquence n'ont pas satisfait un seuil de qualité ; et
un moyen pour envoyer une demande de changement de fréquence à l'autre étiquette d'identification RFID (324), la demande de changement de fréquence comprenant une instruction pour passer à la seconde fréquence.

9. Système comprenant un ou plusieurs supports de stockage tangibles lisibles par ordinateur comprenant des instructions exécutables par un ordinateur destinées, lorsqu'elles sont exécutées par au moins un processeur d'ordinateur, à permettre au ou aux processeurs d'ordinateur d'effectuer les opérations consistant :
à envoyer une demande de communication à l'aide d'une étiquette d'identification par radiofréquence (RFID) (306), à une autre étiquette d'identification RFID (324), la demande de communication comprenant une première fréquence qui doit être utilisée pour des communications vocales (502) ; et
à recevoir, à l'aide d'une étiquette d'identification RFID (306), une réponse à la demande de communication en provenance de l'étiquette d'identification RFID, la réponse comprenant un accusé de réception de la première fréquence ou d'une fréquence alternative (504) ;
à recevoir, à l'aide d'une radio modulée en fréquence (308), les communications vocales fournies sur la première fréquence ou une fréquence alternative (508), la radio modulée en fréquence comprenant un émetteur et un récepteur.

10. Appareil selon la revendication 9, dans lequel la fréquence comprend une première fréquence et la demande de communication comprend en outre une seconde fréquence, le ou les processeurs étant en outre configurés pour exécuter les instructions lisibles par ordinateur consistant :
à déterminer que les communications vocales fournies sur la première fréquence n'ont pas satisfait un seuil de qualité; et
à envoyer une demande de changement de fréquence, à l'aide de l'étiquette d'identification RFID (306), à l'autre étiquette d'identification RFID (324), la demande de changement de fréquence comprenant une instruction pour passer à la seconde fréquence ;
à recevoir, à l'aide de l'étiquette d'identification RFID (306), un accusé de réception à la demande de changement de fréquence ; et
à recevoir, à l'aide de la radio modulée en fréquence (308), les communications vocales fournies sur la seconde fréquence.

11. Procédé réalisé par une étiquette d'identification par radiofréquence (RFID) (324) consistant :
à recevoir une demande de communication en provenance d'une étiquette d'identification RFID active (306) (402), la demande de communication comprenant une fréquence pour des communications vocales, l'étiquette d'identification RFID (324) comprenant une mémoire pour coder la fréquence et une antenne ;
à coder une ou plusieurs fréquences pour des dispositifs de radiocommunication, la ou les fréquences étant utilisées pour des communications vocales entre les dispositifs de radiocommunication ; et
à envoyer une réponse à la demande de communication vocale à l'étiquette d'identification RFID active (306), la réponse comprenant un accusé de réception de la fréquence ou d'une fréquence alternative parmi la ou les fréquences codées (404).

12. Procédé selon la revendication 11, consistant en outre :
à recevoir une demande de changement de fréquence, à l'aide de l'étiquette d'identification RFID (324), la demande de changement de fréquence comprenant une instruction pour passer à la seconde fréquence ;
à envoyer, à l'aide de radio modulée en fréquence RFID (326), un accusé de réception à la demande de changement de fréquence ; et
à recevoir, à l'aide de l'étiquette d'identification RFID (324), les communications vocales fournies sur la seconde fréquence.

13. Appareil comprenant un ou plusieurs supports de stockage tangibles lisibles par ordinateur comprenant des instructions exécutables par un ordinateur destinées, lorsqu'elles sont exécutées par au moins un processeur d'ordinateur, à permettre au ou aux processeurs d'ordinateur d'effectuer les opérations consistant :
à recevoir une demande de communication à l'aide d'une étiquette d'identification RFID (306), la demande de communication comprenant une fréquence pour des communications vocales (402) ;
à coder une ou plusieurs fréquences pour des dispositifs de radiocommunication, sur une étiquette d'identification RFID, la ou les fréquences étant utilisées pour des communications vocales entre les dispositifs de radiocommunication ; et
à envoyer une réponse à la demande de communication vocale à l'étiquette d'identification RFID active (306), la réponse comprenant un accusé de réception de la fréquence ou d'une fréquence alternative parmi la ou les fréquences codées.

14. Appareil selon la revendication 13, le ou les processeurs étant en outre configurés pour exécuter les instructions lisibles par ordinateur pour programmer la mémoire pour stocker ou éditer la ou les fréquences.

15. Appareil selon les revendications 13 ou 14, dans lequel les dispositifs de radiocommunication comprennent une radio modulée en fréquence, une radio modulée en amplitude ou une combinaison de ces dernières.
